# EUROPEAN PATENT SPECIFICATION

(11) **EP 2 199 970 B1**
(45) Date of publication and mention of the grant of the patent: **15.08.2018**
(21) Application number: 09178537.8
(22) Date of filing: 09.12.2009
(51) Int. Cl.: G06T 1/00

(54) **Watermarking compressed video data by changing blocks' prediction mode**
Einbettung von Wasserzeichen in komprimierte Videodaten durch Änderung des Vorhersagemodus der Blöcke
Tatouage d'un signal vidéo en changeant le mode de prédiction des blocs

(30) Priority: 19.12.2008 FR 0858826
(43) Date of publication of application: 23.06.2010
(73) Proprietor: Thomson Licensing DTV, 92130 Issy-les-Moulineaux (FR)
(72) Inventor: Bordes, Philippe, 92648, BOULOGNE CEDEX (FR); Orhand, Anita, 92648, BOULOGNE CEDEX (FR)
(74) Representative: Lorette, Anne

(56) References cited:
- WO-A-2008/154041
- US-A1- 2006 227 873
- NÜKHET ÖZBEK ET AL: "A Survey on the H.264/AVC Standard" INTERNET CITATION, [Online] vol. 13, no. 3, pages 287-302, XP002496535 Retrieved from the Internet: URL:http://journals.tubitak.gov.tr/elektri k/issues/elk-05-13-3/elk-13-3-1-0408-5.pdf > [retrieved on 2008-09-19]
- BHATTACHARYA S ET AL: "A Survey on Different Video Watermarking Techniques and Comparative Analysis with Reference to H.264/AVC" CONSUMER ELECTRONICS, 2006. ISCE '06. 2006 IEEE TENTH INTERNATIONAL SY MPOSIUM ON ST. PETERSBURG, RUSSIA 28-01 JUNE 2006, PISCATAWAY, NJ, USA,IEEE, 28 June 2006 (2006-06-28), pages 1-6, XP010937941 ISBN: 978-1-4244-0216-8

## Description

### 1. Scope of the invention

The invention relates to the general domain of transmission of data inserted in an encoded data stream representative of a sequence of images. More specifically, the invention relates to a method for insertion of data in a block of image data to be coded and a method for reading data inserted in the block. The invention also relates to an encoding device and a transcoding device implementing the method of data insertion.

### 2. Prior art

The insertion of data in a signal, particularly a sequence of images, has numerous applications in varied domains such as security, authentication, transport of metadata, etc.

For this purpose, it is known in the prior art to insert data, for example a succession of bits, to use a watermarking method. Such a method processes a set of "support" data (typically video data) and a certain number of parameters. The number of parameters notably generally figures the watermarking message (i.e. the data to be inserted), that is represented by a series of M binary elements (M≥1). Generally, other parameters are found, such as the key that provides a certain level of security, the marking force, etc. According to these parameters and to the image sequence itself, the watermark method modifies the image data to produce a watermarked image sequence.

Methods for watermarking are known that modify the image data in the frequency domain. For example, an image being divided into blocks of image data, each block is transformed using a DCT (Discrete Cosine Transform). The watermark method consists in modifying the value of some of these coefficients according to the value of the data to be inserted, the value of a secret key and the marking force. According to a variant, the coefficients are modified only in the image zones having little interest from a visual perspective. The coefficients thus modified are then transformed by an inverse transform to that applied previously, for example an IDCT (Inverse Discrete Cosine Transform) to return into the spatial domain. The image thus watermarked can, in its turn, be coded. Such a method for watermarking has the disadvantage of not being robust for coding of data and of modifying the original image data. In fact, during the coding of the watermarked image a DCT coefficients quantification is carried out that can cause a loss of watermarking information that was linked to a specific value of DCT coefficients.

The patent application WO2008/154041 discloses a watermarking method by modifying the value of one or more syntax elements.

The document from Ozbek et al. entitled "A survey on the H.264/AVC standard*"* surveys the H.264/AVC standard.

Another known method consists in inserting the data directly in the spatial domain. Generally, the data are inserted in the zones of the image having little interest from a visual perspective so as not to render it too visible. The image data thus modified can then be coded in a coded data stream representative of the image sequence. The disadvantage of this method is that it modifies the initial image sequence and consequently possibly renders the data to be inserted visible. Moreover, such a method does not enable the insertion of a large quantity of data. In fact, the insertion of a high number of data risks rendering visible the inserted data. moreover, such a method does not always enable the reading of all the inserted data to be guaranteed. In fact, it can be that the original image contains before watermarking image data that can be interpreted as data inserted by a watermarking reader.

### 1. Summary of the invention

The purpose of the invention is to compensate for at least one disadvantage of the prior art.

For this purpose, the invention, as defined in the appended claims, relates to a method for insertion of data in a block of image data, called the current block, of a sequence of images. The current block is coded or intended to be coded in the form of temporally predicted image data from prediction image data defined according to a first prediction mode. According to the invention, the insertion method comprises the modification, according to said data to be inserted, of the first prediction mode into a second prediction mode different from the first prediction mode with a view to coding of the current block according to the second prediction mode, the second prediction mode being defined so that the prediction image data obtained with the second prediction mode are identical to the prediction image data obtained with the first prediction mode.

According to a particularly advantageous aspect of the invention, the method for insertion of data according to the invention enables the insertion of data in a compressed image data stream without the images reconstructed from this stream being modified. In fact, the second prediction mode retained does not change the reconstructed image, as the motion vector retained for each sub-block is that which was previously selected for the block B. Hence the image reconstructed without any data being inserted or the image reconstructed after the insertion of data, are rigorously identical, which is not the case with any of the known methods for insertion of data. The method for insertion according to the invention also has the advantage of guarantying the reading of the totality of the data inserted. Another advantage of the invention is to facilitate the insertion and/or the replacement of data in a simple manner. In fact, contrary to known methods, the method for insertion according to the invention does not require image data to be transformed in the frequency domain, or specific processing of the image.

According to a specific embodiment, the first prediction mode defines a first partition of the current block in at least one sub-block to which at least one motion data is associated and the second prediction mode defines a second partition of the current block in at least two sub-blocks, the second partition being a subpartition of the first partition. The method further comprises the association with each of the at least two sub-blocks of the second partition of the corresponding at least one motion data of the first partition.

According to a specific embodiment, the at least one motion data is a motion vector and an index identifying a reference image in the sequence.

According to a specific characteristic of the invention, the first prediction mode is the INTER_16x16 mode and the second prediction mode is the INTER_8x16 mode if the data to be inserted is a bit of a first value and the second prediction mode is the INTER_16x8 mode if the data to be inserted is a bit of a second value different to the first value.

According to another specific characteristic of the invention, the first prediction mode is the INTER_16x8 mode and the second prediction mode is the INTER_8x8 mode if the data to be inserted is a bit of a first value.

According to a specific characteristic of the invention, the first prediction mode is the INTER_8x16 mode and the second prediction mode is the INTER_8x8 mode if the data to be inserted is a bit of a second value different to the first value.

According to another specific characteristic of the invention, the first prediction mode is the INTER_SKIP mode and the second prediction mode is the INTER_16x16 mode.

According to a specific characteristic of the invention, the first prediction mode is the INTER_8x8 mode and the second prediction mode is the INTER_4x8 mode if the data to be inserted is a bit of a first value and the second prediction mode is the INTER_8x4 mode if the data to be inserted is a bit of a second value different to the first value.

According to another specific characteristic of the invention, the first prediction mode is the INTER_8x4 mode and the second prediction mode is the INTER_4x4 mode if the data to be inserted is a bit of a first value.

According to another specific characteristic of the invention, the first prediction mode is the INTER_4x8 mode and the second prediction mode is the INTER_4x4 mode if the data to be inserted is a bit of a second value different to the first value.

The invention also relates to a method for reading data inserted into a coded data stream representative of a block of image data, called the current block, of a sequence of images. The stream comprises information representative of a prediction mode defining a partition of a current block into at least one sub-blocks, and comprises for the at least one sub-block, called first sub-block, information representative of at least one motion data. According to an essential characteristic of the invention, the reading method comprises the following steps:
- determining the prediction mode of the current block and, for the first sub-block, at least one motion data from the coded data stream,
- comparing the at least one motion data with a comparison motion data, and
- reading an inserted data if the at least one motion data and the comparison motion data are identical.

The invention moreover relates to a coding device of a sequence of images, each image being divided into blocks of image data comprising:
- a motion estimation module able to determine at least one motion data between a current block of image data and a reference block of image data,
- a decision module able to select for the current block a first prediction mode defining a first partition of the current block in at least one sub-block,
- a prediction module able to calculate, according to the first prediction mode, a prediction block of the current block from the reference block identified using the at least one motion data,
- a calculation module able to subtract from the current block the prediction block to generate residues,
- a processing module able to transform and quantify the residues into quantified residues, and
- an entropy coding module able to code quantified residues, the first prediction mode and the motion data in a stream of coded data.
According to a particularly advantageous aspect of the invention, the coding device also comprises a data insertion module able to modify according to the data to be inserted, the first prediction mode into a second prediction mode defining a second partition of the current block into at least a sub-block, the second partition being different from the first partition, and able to associate with the sub-block of the second partition, the at least one motion data associated with the current block.

The invention also relates to a transcoding device of a first stream of coded data representative of a sequence of images into a second stream of coded data representative of the same sequence of images each image being divided into blocks of image data. The transcoding device comprises:
- a decoding module able to reconstruct, from a part of the first stream representative of a current block, image data relating to the current block, a first prediction mode defining a first partition of the current block into at least one sub-block and, for each sub-block, at least one motion data,
- a prediction module able to calculate, according to the first prediction mode, a prediction block from the reference block of the sequence identified using the at least one motion data,
- a calculation module able to subtract from the current block the prediction block to generate residues,
- a processing module able to transform and quantify the residues into quantified residues, and
- an entropy coding module able to code quantified residues, the first prediction mode and the at least one motion data in a second stream of coded data.
According to an important characteristic of the invention, the transcoding device also comprises a data insertion module able to modify according to the data to be inserted, the first prediction mode into a second prediction mode defining a second partition of the current block into at least a sub-block, the second partition being different from the first partition, and able to associate with the sub-block of the second partition, the at least one motion data associated with the current block.

The invention also relates to a device for insertion of data in a first stream of coded data representative of a sequence of images each image being divided into blocks of image data comprising:
- an entropy decoding module able to reconstruct, from a part of the first stream representative of a current block, image data relating to the current block, a first prediction mode defining a partition of the current block into at least one sub-block and, for each sub-block, at least one motion data,
- an entropy coding module able to code image data relative to the current block, the first prediction mode and the at least one motion data in a second stream of coded data.
Advantageously, the data insertion device also comprises a data insertion module able to modify according to the data to be inserted, the first prediction mode into a second prediction mode defining a second partition of the current block into at least a sub-block, the second partition being different from the first partition, and able to associate with the sub-block of the second partition, the at least one motion data associated with the current block.

The coding device, the transcoding device and the data insertion device offer the same advantages as those mentioned in relation to the method for data insertion that is notably the images reconstructed from the stream of coded data in which the data were inserted.

### 4. List of figures

The invention will be better understood and illustrated by means of embodiments and implementations, by no means limiting, with reference to the annexed figures, wherein:
- figure 1 illustrates a coding device according to the prior art,
- figure 2 represents the division or partition of a 16x16 block into sub-blocks,
- figure 3 represents the division or partition of an 8x8 block into sub-blocks,
- figure 4 shows an inter-image prediction method,
- figure 5 shows a data insertion method according to the invention,
- figure 6 shows the data insertion method in a 16x16 block according to a particular embodiment of the invention,
- figure 7 shows the data insertion method in a 16x16 block divided into two 8x16 sub-blocks according to a particular embodiment of the invention,
- figure 8 shows the data insertion method in a 16x16 block divided into two 16x8 sub-blocks according to a particular embodiment of the invention,
- figure 9 shows the data insertion method in a 16x16 block for which the prediction mode is the skip mode according to a particular embodiment of the invention,
- figure 10 shows the data insertion method in an 8x8 block according to a particular embodiment of the invention,
- figure 11 shows the data insertion method in an 8x8 block divided into two 4x8 sub-blocks according to a particular embodiment of the invention,
- figure 12 shows the data insertion method in an 8x8 block divided into two 8x4 sub-blocks according to a particular embodiment of the invention,
- figure 13 shows a method for reading of data inserted in a block of coded image data according to the invention,
- figures 14 and 15 show the method for reading inserted data according to a particular embodiment of the invention,
- figure 16 shows a coding device comprising a data insertion module according to the invention,
- figure 17 shows a transcoding device comprising a data insertion module according to the invention, and
- figure 18 shows a device for insertion of data in a stream of coded image data according to the invention.

### 5. Detailed description of the invention

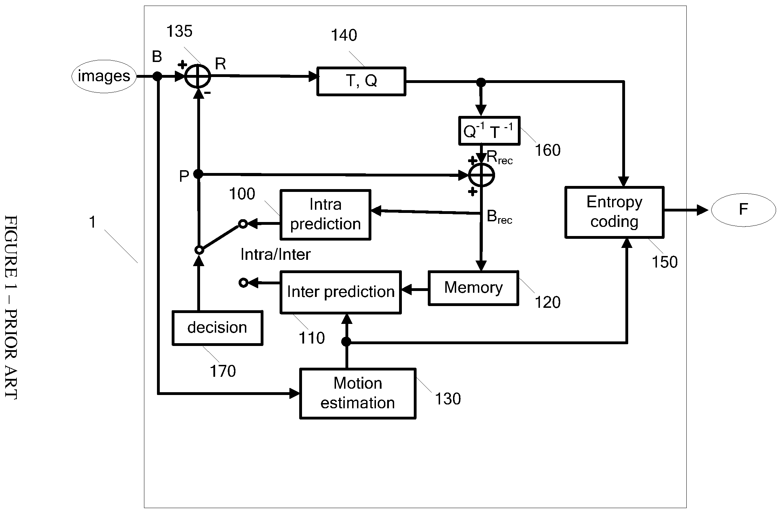

**Figure 1** diagrammatically shows a coding device according to the prior art. The coding device 1 typically codes an image divided into blocks B. Each block B is coded in intra or inter mode. Generally, the coding mode, for a current block B, is selected by a decision module 170. According to a known embodiment, the decision module 170 selects the coding mode that offers the best bitrate/distortion compromise. In the case of intra or inter mode, a block of data of prediction image P is generated by an intra prediction module 100 (also called a spatial prediction module) or by an inter prediction module 110 (also called a temporal prediction module) from reconstructed blocks B_{rec} stored in a memory 120. If a block is coded in intra mode, P is generated from pixels of blocks situated in the causal neighbouring area of the current block, i.e. of blocks coded, reconstructed and stored in the memory 120. If a block is coded in inter mode, P is generated from a block or from more than one blocks B_{rec} of reference image(s) already coded, reconstructed and stored in the memory 120. The inter prediction module 110 carries out a motion compensation of blocks of reference images from motion vectors estimated by the motion estimation module 130. In order to generate a prediction block P, the coding device 1 also comprises a decoding loop suitable for generating block of reconstructed residue R_{rec}. The decoding loop comprises notably a module 160 of inverse quantification and inverse transformation. A calculation module 135 subtracts pixel by pixel the prediction block P generated from the current block B to generate a residue block R. The residue block R is then transformed and quantified by the module 140. The coefficients of the residue block R thus generated are then coded by an entropy coding module 150. The entropy coding module 150 generates a stream F of coded data representative of the sequence of images.

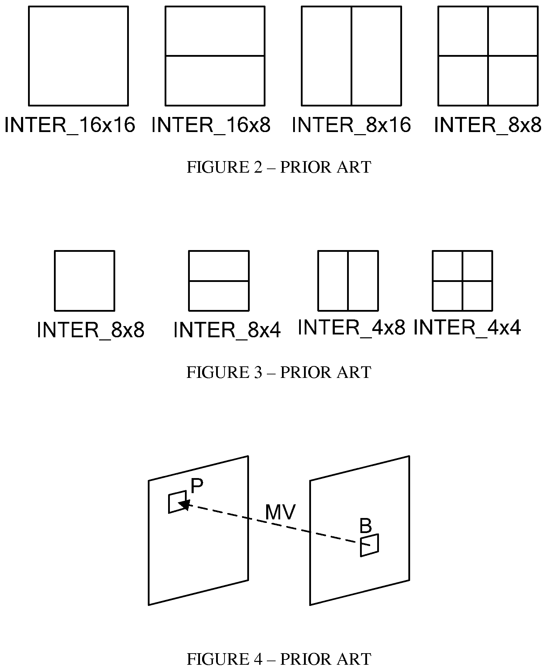

In the particular case of the standard H.264 or MPEG-4 AVC, described in the document ISO/IEC 14496-10, each block B coded in mode inter, i.e. predicted from the blocks of image data belonging to the images previously coded, called reference images, is divided into sub-blocks. The way in which the block is divided and predicted is called prediction mode. The prediction mode thus defines a partition of block B into one or more sub-blocks. A partition of a block B is a division of this block into disjoint sub-blocks, the union of the sub-blocks forming the block B. This prediction mode is also selected by the decision module 170. Such prediction modes are shown in **figures 2** and **3****.** If the block B is of size 16x16, the prediction mode INTER_16x16 indicates that it is not divided and is predicted and coded in the form of a block of size 16x16. However, if the block B is of size 16x16, the prediction mode INTER_16x8 indicates that it is divided into 2 sub-blocks of size 16x8. If the block B is of size 16x16, the prediction mode INTER_8x16 indicates that it is divided into 2 sub-blocks of size 8x16. If the block B is of size 16x16, the prediction mode INTER_8x8 indicates that it is divided into 4 sub-blocks of size 8x8. In this last case, each sub-block 8x8 can itself be divided into sub-blocks of size 8x4, 4x8 or 4x4 in compliance with the partitions shown in **figure 3****.** Each sub-block of a block is then coded by prediction from the image data previously coded, reconstructed and stored in the memory 20. These prediction image data P are identified for a block or sub-block B by at least one motion data DMV, typically a motion vector MV in compliance with **figure 4****.** According to a variant, the prediction image data P are identified by a motion vector and also a reference image index. This index enables identification of the reference image in the sequence of images, i.e. the image to which belongs the prediction image data P. In fact, this prediction image data P can be found in images distant by more than one images from the current image that is the image to which the current block B belongs. It is convenient then to identify it using an index. It is known in the prior art of video coders that a current block B can be predicted from two sets of prediction image data each being identified using a motion vector and possibly a reference image index. This prediction type is known under name of bidirectional prediction. The motion data enabling to identify for a current block B the prediction image data are associated with said current block B and coded in the stream F with the image data relating to the current block. Moreover, a block B can be skipped in which case it is possibly not divided according to one of the partitions represented on figures 2 and 3. If a block B is skipped, i.e. its prediction mode is the mode INTER_SKIP, then no motion data, nor any residue is transmitted for this block B in the stream F. Such a skipped block is reconstructed on the coder side from a block of a reference image identified using a predicted motion vector. This latter is generated either from motion vectors associated with the blocks neighbouring the block B, for example from the median vector of motion vectors associated with the following 3 blocks: that situated just above, that situated in the left corner and that situated just left of the current block B, or from motion vectors associated with the blocks co-located in the reference images.

In the specific case of the standard H.264, at each sub-block are associated the motion data enabling identification of the image data from which said sub-block is predicted. As described previously in reference to figure 1, these motion data DMV are selected by a decision module 170 so as to minimise the bitrate while maximising the coding quality.

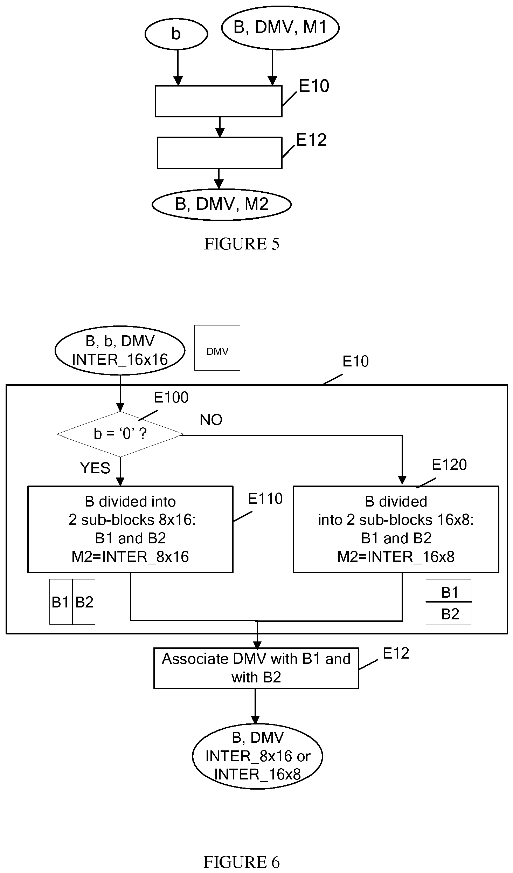

Figures 5 to 12 show the method for insertion of data in a stream F of coded data relating to a sequence of images. More specifically, **figure 5** shows the insertion of a data b, for example a bit, in a block of image data B, said current block, already coded or intended to be coded in the form of image data predicted according to a first prediction mode M1 with respect to at least one block of reference image data P identified using at least one motion data DMV. The first prediction mode M1 is selected by a decision module of module type 170. The prediction mode M1 defines a first partition of the block B. During a step E10, the first prediction mode M1 of block B is modified into a second prediction mode M2 according to the data b to be inserted. The second prediction mode M2 defines a second partition of the block B different to the first partition. The term block is to be taken in a very general sense and includes notably the macroblocks and sub-blocks. In fact, the block B can itself come from the partition into sub-blocks of a block. This is notably the case if the block B is a block 8x8 resulting from the previous partition of a 16x16 block.

During a step E12, the same motion data DMV initially associated with the block B are associated with the sub-block(s) resulting from the modification of the prediction mode in step E10 with a view to coding the block B in order to get a representation of block B equivalent to the representation obtained with the prediction mode M1. In this case the prediction data of block B with the prediction mode M1 are identical to the prediction data of block B with the prediction mode M2. The term sub-block is also to be understood in a general sense. Thus, if M1=INTER_SKIP and M2=INTER_16x16, the sub-block resulting from the modification of the prediction mode in step E10 is a block of size 16x16.

With the aim of describing more precisely the invention, a code is defined for the insertion of data as shown in table TAB1 below.

| | Data to be inserted (mode M2) | |
|---|---|---|
| First Partition of block B (mode M1) | Bit '0' | Bit '1' |
| INTER_16x16 | INTER_8x16 | INTER_16x8 |
| INTER_16x8 | | INTER_8x8 |
| INTER_8x16 | INTER_8x8 | |
| INTER_SKIP | INTER_16x16 | |
| INTER_8x8 | INTER_4x8 | INTER_8x4 |
| INTER_8x4 | | INTER_4x4 |
| INTER_4x8 | INTER_4x4 | |

Unless otherwise stated, the embodiments are described with respect to this table of coding. However, a different code can be used without calling into question the principle of the invention. The partition defined with the second prediction mode M2 is a subpartition of the partition defined with the first prediction mode M1. For example, the partition of a block 16x16 can be used to transmit a bit '0' instead of a bit '1'.

**Figure 6** illustrates a specific embodiment of the invention. The current block B is a block of size 16x16 with M1=INTER_16x16. The data to be inserted is a bit b. At step E100, the bit b is compared to 0. If the bit b is equal to 0, the method continues to step E110. At step E110, the block B is divided in two sub-blocks B1 and B2 each of size 8x16, i.e. the prediction mode of block B is modified from M1=INTER_16x16 to M2=INTER_8x16 in compliance with TAB1. If at step E100, the bit b is equal to 1, the method continues to step E120. At step E120, the block B is divided in two sub-blocks B1 and B2 each of size 16x8, i.e. the prediction mode of block B is modified from M1=INTER_16x16 to M2=INTER_16x8 in compliance with TAB1. At step E12, the motion data DMV associated with block B are each associated with the sub-blocks B1 and B2 with a view to the coding of B. The initial block B 16x16 with its motion data DMV or the final block 16x16 divided into two sub-blocks 8x16 to each of which is associated the motion data DMV are both equivalent representations of the block B, i.e. the prediction data obtained with the first prediction mode M1=INTER_16x16 are identical to the prediction data obtained with the second prediction mode M2=INTER_8x16. Likewise, the initial block B 16x16 with its motion data DMV or the final block 16x16 divided into two sub-blocks 16x8 to each of which is associated the motion data DMV are two equivalent representations of block B, i.e. the prediction data obtained with the first prediction mode M1=INTER_16x16 are identical to the prediction data obtained with the second prediction mode M2=INTER_16x8. According to a variant using a different code to that presented in the table TAB1, at step E100, the bit b is compared to 1. If the block b is equal to 1, the method continues to step E110 if not it continues to step E120.

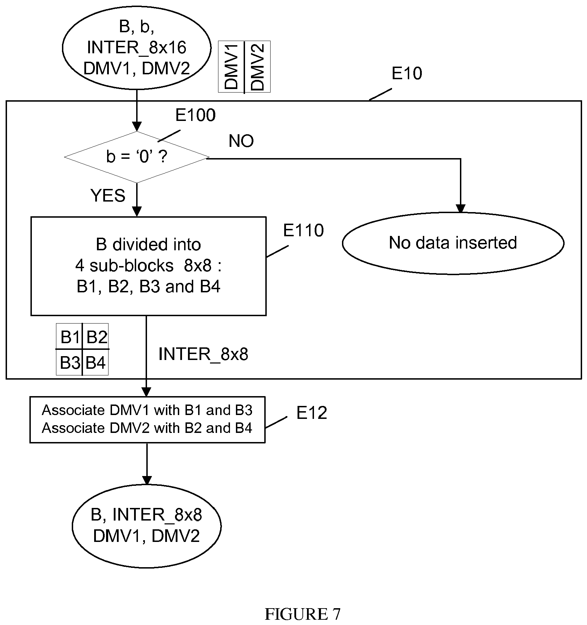

**Figure 7** illustrates a specific embodiment of the invention. The current block B is a block of size 16x16 divided into two sub-blocks 8x16, i.e. M1=INTER_8x16. The data to be inserted is a bit b. At step E100, the bit b is compared to 0. If the bit b is equal to 0, the method continues to step E110. At step E110, the block B is divided into four sub-blocks B1, B2, B3 and B4 each of size 8x8, i.e. the prediction mode of block B is modified from M1=INTER_8x16 to M2=INTER_8x8 in compliance with TAB1. If at step E100, the bit b is equal to 1, no data is inserted. At step E12, the motion data DMV1 associated with the sub-block 8x16 to the left of B are associated with the sub-blocks 8x8 B1 and B3 with a view to coding of B. At step E12, the motion data DMV2 associated with the sub-block 8x16 to the right of block B are associated with the sub-blocks 8x8 B2 and B4 with a view to coding of B. The initial block 16x16 with its motion data DMV1 and DMV2 or the final block 16x16 divided into four sub-blocks 8x8 to which are associated the motion data DMV1 and DMV2 are two equivalent representations of block B, i.e. the prediction data obtained with the first prediction mode M1=INTER_8x16 are identical to the prediction data obtained with the second prediction mode M2=INTER_8x8.

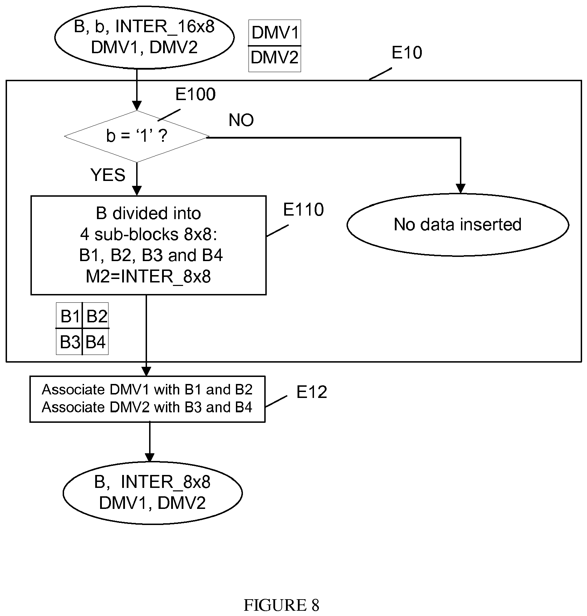

**Figure 8** illustrates a specific embodiment of the invention. The current block B is a block of size 16x16 divided into two sub-blocks 16x8, i.e. M1=INTER_16x8. The data to be inserted is a bit b. At step E100, the bit b is compared to 1. If the bit b is equal to 1, the method continues to step E110. At step E110, the block B is divided into four sub-blocks B1, B2, B3 and B4 each of size 8x8, i.e. the prediction mode of block B is modified from M1=INTER_16x8 to M2=INTER_8x8 in compliance with TAB1. If at step E100, the bit b is equal to 0, no data is inserted. At step E12, the motion data DMV1 associated with the sub-block 16x8 above block B are associated with the sub-blocks 4x4 B1 and B2 with a view to coding of B. At step E12, the motion data DMV2 associated with the sub-block 8x16 below block B are associated with the sub-blocks 8x8 B3 and B4 with a view to coding of B. The initial block 16x16 with its motion data DMV1 and DMV2 or the final block 16x16 divided into four sub-blocks 8x8 to which are associated the motion data DMV1 and DMV2 are two equivalent representations of block B, i.e. the prediction data obtained with the first prediction mode M1=INTER_16x8 are identical to the prediction data obtained with the second prediction mode M2=INTER_8x8.

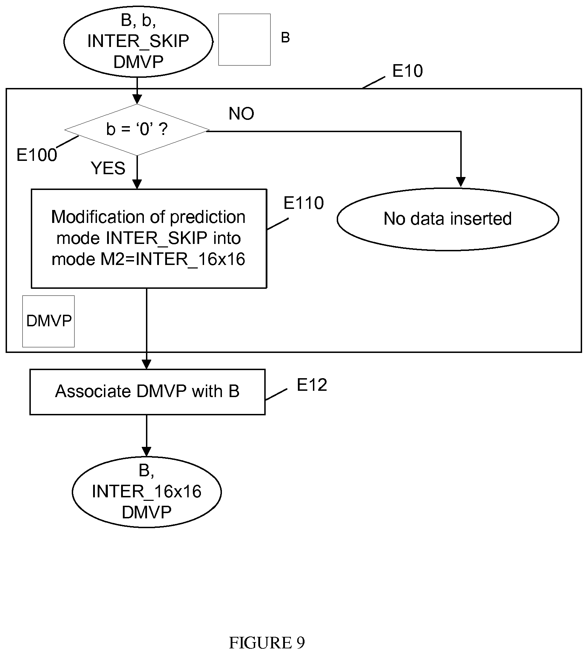

**Figure 9** illustrates a specific embodiment of the invention. The current block B is a block of size 16x16 for which the prediction mode is the skip mode, i.e. M1=INTER_SKIP. The data to be inserted is a bit b. At step E100, the bit b is compared to 0. If the bit b is equal to 0, the method continues to step E110. At step E110, the prediction mode of the block B is modified from M1=INTER_SKIP to M2=INTER_16x16 in compliance with TAB1. If at step E100, the bit b is equal to 1, no data is inserted. At step E12, the predicted motion data DMVP for the mode INTER_SKIP, i.e. the motion data predicted from motion data of neighbouring blocks of block B or from motion data associated with the co-localised block in a reference image are associated with the block B with a view to its coding. The initial skipped block with its motion data DMVP or the final 16x16 block to which are associated the motion data DMVP are to equivalent representations of block B, i.e. the prediction data obtained with the first prediction mode M1=INTER_SKIP are identical to the prediction data obtained with the second prediction mode M2=INTER_16x16.

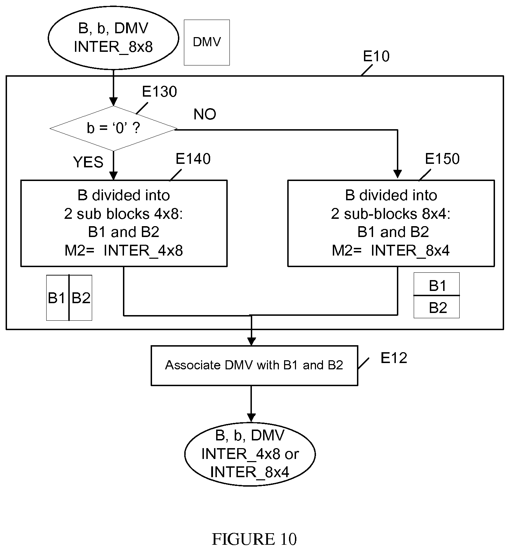

**Figure 10** illustrates a specific embodiment of the invention. The current block B is a block of size 8x8 with M1=INTER_8x8. The data to be inserted is a bit b. At step E100, the bit b is compared to 0. If the bit b is equal to 0, the method continues to step E110. At step E110, the block B is divided in two sub-blocks B1 and B2 each of size 4x8, i.e. the prediction mode of block B is modified from M1=INTER_8x8 to M2=INTER_4x8 in compliance with TAB1. If at step E100, the bit b is equal to 1, the method continues to step E120. At step E110, the block B is divided in two sub-blocks B1 and B2 each of size 8x4, i.e. the prediction mode of block B is modified from M1=INTER_8x8 to M2=INTER_8x4 in compliance with TAB1. At step E12, the motion data DMV associated with block B are each associated with the sub-blocks B1 and B2 with a view to the coding of B. The initial block B 8x8 with its motion data DMV or the final block 8x8 divided into two sub-blocks 4x8 to each of which is associated the motion data DMV are both equivalent representations of the block B, i.e. the prediction data obtained with the first prediction mode M1=INTER_8x8 are identical to the prediction data obtained with the second prediction mode M2=INTER_4x8. Likewise, the initial block B 8x8 with its motion data DMV or the final block 8x8 divided into two sub-blocks 8x4 to each of which is associated the motion data are two equivalent representations of block B, i.e. the prediction data obtained with the first prediction mode M1=INTER_8x8 are identical to the prediction data obtained with the second prediction mode M2=INTER_8x4. According to a variant using a different code to that presented in the table TAB1, at step E100, the bit b is compared to 1. If the block b is equal to 1, the method continues to step E110 if not it continues to step E120.

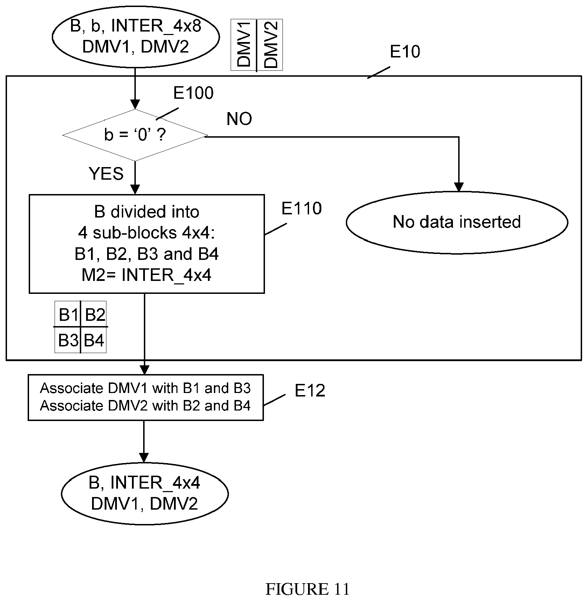

**Figure 11** illustrates a specific embodiment of the invention. The current block B is a block of size 8x8 divided into two sub-blocks 4x8, i.e. M1=INTER_4x8. The data to be inserted is a bit b. At step E100, the bit b is compared to 0. If the bit b is equal to 0, the method continues to step E110. At step E110, the block B is divided into four sub-blocks B1, B2, B3 and B4 each of size 4x4, i.e. the prediction mode of block B is modified from M1=INTER_4x8 to M2=INTER_4x4 in compliance with TAB1. If at step E100, the bit b is equal to 1, no data is inserted. At step E12, the motion data DMV1 associated with the sub-block 4x8 to the left of B are associated with the sub-blocks 4x4 B1 and B3 with a view to coding of B. At step E12, the motion data DMV2 associated with the sub-block 4x8 to the right of block B are associated with the sub-blocks 4x4 B2 and B4 with a view to coding of B. The initial block 8x8 with its motion data DMV1 and DMV2 or the final block 8x8 divided into four sub-blocks 4x4 to which are associated the motion data DMV1 and DMV2 are two equivalent representations of block B, i.e. the prediction data obtained with the first prediction mode M1=INTER_4x8 are identical to the prediction data obtained with the second prediction mode M2=INTER_4x4.

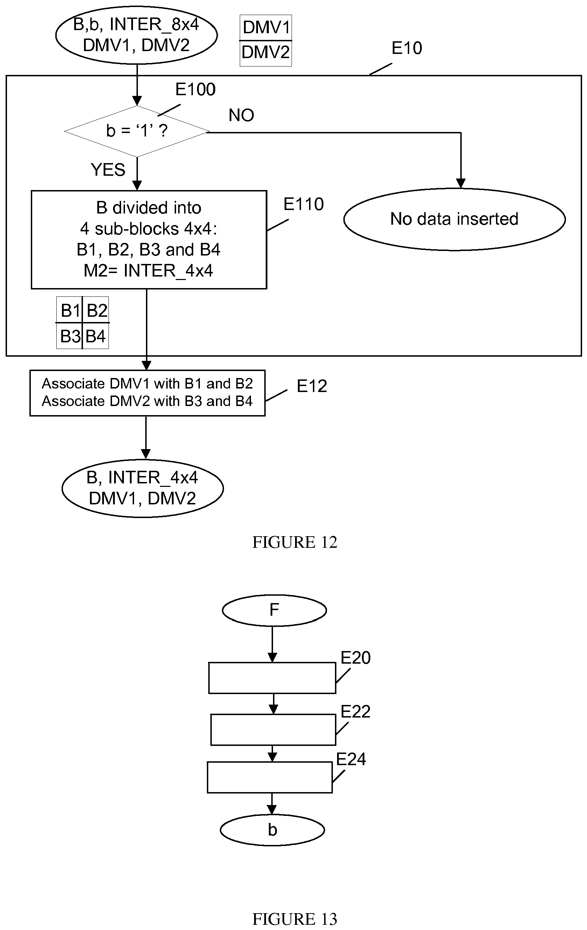

**Figure 12** illustrates a specific embodiment of the invention. The current block B is a block of size 8x8 divided into two sub-blocks 8x4, i.e. M1=INTER_8x4. The data to be inserted is a bit b. At step E100, the bit b is compared to 1. If the bit b is equal to 1, the method continues to step E110. At step E110, the block B is divided into four sub-blocks B1, B2, B3 and B4 each of size 4x4, i.e. the prediction mode of block B is modified from M1=INTER_8x4 to M2=INTER_4x4 in compliance with TAB1. If at step E100, the bit b is equal to 0, no data is inserted. At step E12, the motion data DMV1 associated with the sub-block 8x4 above block B with a view to its coding is associated with the sub-blocks 4x4 B1 and B2. At step E12, the motion data DMV2 associated with the sub-block 4x8 below block B with a view to its coding is associated with the sub-blocks 4x4 B3 and B4. The initial block 8x8 with its motion data DMV1 and DMV2 or the final block 8x8 divided into four sub-blocks 4x4 to which are associated the motion data DMV1 and DMV2 are two equivalent representations of the block B, i.e. the prediction data obtained with the first prediction mode M1=INTER_8x4 are identical to the prediction data obtained with the second prediction mode M2=INTER_4x4.

The method for insertion described in reference to figures 5 to 12 for a block of image data can be advantageously reiterated on all the blocks in INTER mode of an image and on all the images of the sequences, apart from the INTRA images or images I.
The method for insertion of data according to the invention enables advantageously to not modify the initial image data, nor the coded residues as no DCT coefficient is modified. Only some prediction modes are modified. Moreover, for a block B the prediction mode is modified in step E10 if a data is inserted, however the new prediction mode retained M2 does not change the reconstructed image, as the motion vector retained for each sub-block is that which was previously selected for the block B. Indeed, the prediction data obtained with the first prediction mode M1 are identical to the prediction data obtained with the second prediction mode M2. Hence the image reconstructed without any data being inserted or the image reconstructed after the insertion of data, are rigorously identical, which is not the case with any of the known methods for insertion of data.
Finally the method according to the invention enables the insertion of data directly in a coded data stream already existing without having to completely decode the stream to reconstruct the initial images. In fact, with the method for insertion according to the invention the only coded data to be modified in the stream F in order to insert data are the prediction modes and thus the partition into sub-blocks.

The invention described in reference to the standard H.264 can be used with any other standard enabling the partition of a block into sub-blocks. For this purpose, the invention can also be applied in the context of the standard VC1 described in the document 421M-2006 from the SMPTE entitled "VC-1 Compressed Video Bitstream Format and Decoding Process" as well as the SMPTE RP227-2006 recommendations entitled "VC-1 Bitstream Transport Encodings" and SMPTE RP228-2006 entitled "VC-1 Decoder and Bitstream Conformance". The invention can also be applied in the context of the Chinese standard AVS.

The invention also relates to a method for reading of data inserted in a block of coded images according to the method for insertion described in reference to the figures 5 to 12. The figures 13 to 15 show the method for reading according to the invention.
More specifically, **figure 13** shows the reading of a data b, for example a bit, inserted in a block of image data B in the form of a stream of coded data F. During a step E20, the partition or division of the block B into sub-blocks as well as the motion data associated with each of the sub-blocks of the block B are determined from part of the coded image data of the stream F representative of said block B.
At step E22, the motion data associated with each of the sub-blocks of block B are compared. According to a variant, the motion data associated with one sub-block of block B is compared with a comparison motion data. In the particular case where the prediction mode of the current block B is the mode INTER_SKIP, the comparison motion data is DMVP, i.e. either the motion data predicted from motion data associated with neighboring blocks or the motion data associated with a block collocated to the current block B in another image of the sequence.
At step E24, an inserted data is read if for some sub-blocks of the current block said motion data are identical.

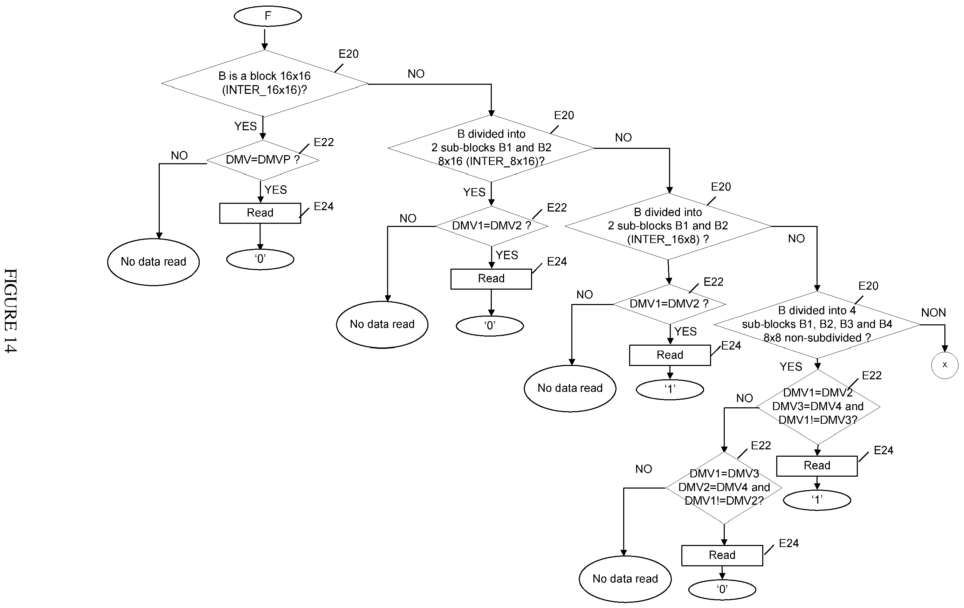

**Figure 14** illustrates a specific embodiment of the invention. At step E20 the partition of block B, i.e. the way in which block B is divided, and the motion data DMV associated with each sub-block of block B are determined from part of the coded data of the stream F representative of said block B. If the block B is a 16x16 block, i.e. its prediction mode is the mode INTER_16x16, then during step E22, the motion data DMV associated with the block B and determined during step E20 are compared with comparison motion data, i.e. with the predicted motion data DMVP in the case of the skip mode. If DMV=DMVP, then in step E24 of the method the bit '0' is read in compliance with the code established by the table TAB1 and known to the read method, if not no data is read. If the block B is divided into 2 blocks B1 and B2 of size 8x16, i.e. its prediction mode is the mode INTER_8x16, then during step E22, the motion data DMV1 and DMV2 associated with each of the sub-blocks B1 and B2 and determined during step E20 are compared. If DM1 and DMV2 are identical then in step E24 of the method the bit '0' is read in accordance with the code established by the table TAB1 and known to the read method. If DMV1 and DMV2 are different, then no data is read.
However, if the block B is divided into 2 blocks B1 and B2 of size 16x8, i.e. its prediction mode is the mode INTER_16x8, then during step E22, the motion data DMV1 and DMV2 associated with each of the sub-blocks B1 and B2 and determined during step E20 are compared. If DM1 and DMV2 are identical then in step E24 of the method the bit '1' is read in accordance with the code established by the table TAB1 and known to the read method. If DMV1 and DMV2 are different, then no data is read.
If the block B is divided into 4 blocks B1, B2, B3 and B4 of size 8x8 and none of the 8x8 blocks is itself divided into sub-blocks, i.e. if its prediction mode is the mode INTER_8x8, then during the step E22, the motion data DMV1, DMV2, DMV3 and DMV4 respectively associated with each of the sub-blocks B1, B2, B3 and B4 and determined during the step E20 are compared. If DMV1=DMV2, DMV3=DMV4 and DMV1 is different to DMV3 then in step E24 of the method the bit '1' is read in accordance with the code established by the table TAB1 and known to the read method. If DMV1=DMV3, DMV3=DMV4 and DMV1 is different to DMV2 then in step E24 of the method the bit '0' is read in accordance with the code established by the table TAB1, if not no data is read.

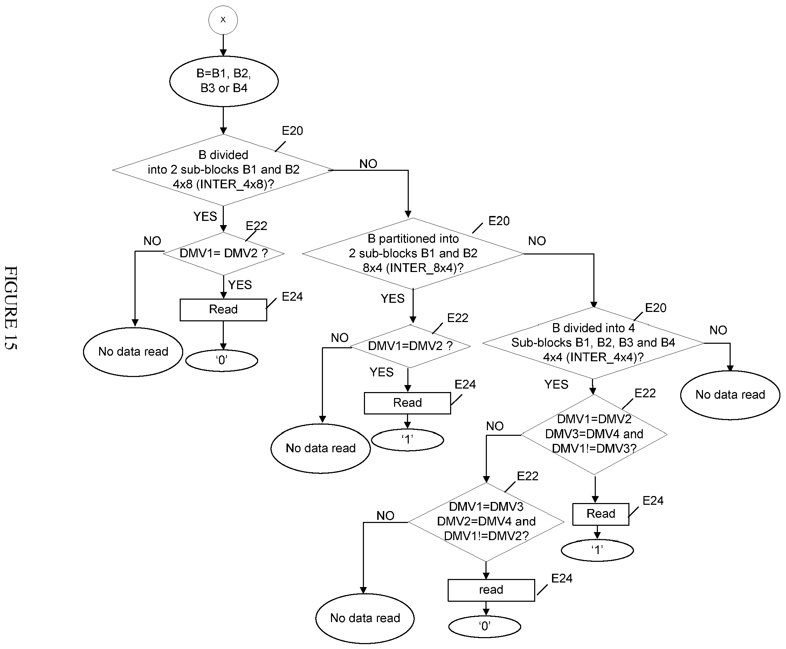

If the block B is divided into 4 blocks B1, B2, B3 and B4 of size 8x8, and if one of the sub-blocks is itself divided then the method illustrated by figure 15 is applied to each of the 8x8 blocks B1, B2, B3 and B4.
Thus at step E20, the partition of block B, i.e. the way in which block B is divided, and the motion data associated with each sub-block of block B are determined from part of the coded data of the stream F representative of said block B. If the block B is divided into 2 blocks B1 and B2 of size 4x8, i.e. if its prediction mode is the mode INTER_4x8, then during step E22, the motion data DMV1 and DMV2 associated with each of the sub-blocks B1 and B2 and determined during step E20 are compared. If DMV1 and DMV2 are identical then in step E24 of the method the bit '0' is read in accordance with the code established by the table TAB1 and known to the read method. If DMV1 and DMV2 are different, then no data is read.
However, if the block B is divided into 2 blocks B1 and B2 of size 8x4, i.e. its prediction mode is the mode INTER_8x4, then during step E22, the motion data DMV1 and DMV2 associated with each of the sub-blocks B1 and B2 and determined during step E20 are compared. If DMV1 and DMV2 are identical then in step E24 of the method the bit '1' is read in accordance with the code established by the table TAB1 and known to the read method. If DMV1 and DMV2 are different, then no data is read.
If the block B is divided into 4 blocks B1, B2, B3 and B4 of size 4x4, i.e. its prediction mode is the mode INTER_4x4, then during step E22, the motion data DMV1, DMV2, DMV3 and DMV4 associated with each of the sub-blocks B1, B2, B3 and B4 determined during step E20 are compared. If DMV1=DMV2, DMV3=DMV4 and DMV1 is different to DMV3 then in step E24 of the method the bit '1' is read in accordance with the code established by the table TAB1 and known to the read method. If DMV1=DMV3, DMV3=DMV4 and DMV1 is different to DMV2 then in step E24 of the method the bit '0' is read in accordance with the code established by the table TAB1. If not no data is read.

The method for reading described in reference to the figures 13 to 15 for a block of image data can be advantageously reiterated on all the blocks in mode INTER of an image and on all the images of the sequences, apart from the INTRA images or I images in order to re-read a sequence of more than one inserted data, for example a watermarking message enabling identification of the provenance of a sequence of images.
Advantageously according to the invention no other data relating to the data inserted needs to be known by the method for reading. Notable there is no need to know the number of data inserted in an image. In fact, according to the invention while decoding the coded data relating to a block and representative of the partition of a block into sub-blocks and motion data associated with the sub-blocks, it is known directly if a data is inserted into the block by comparing the motion data associated with each of the sub-blocks.

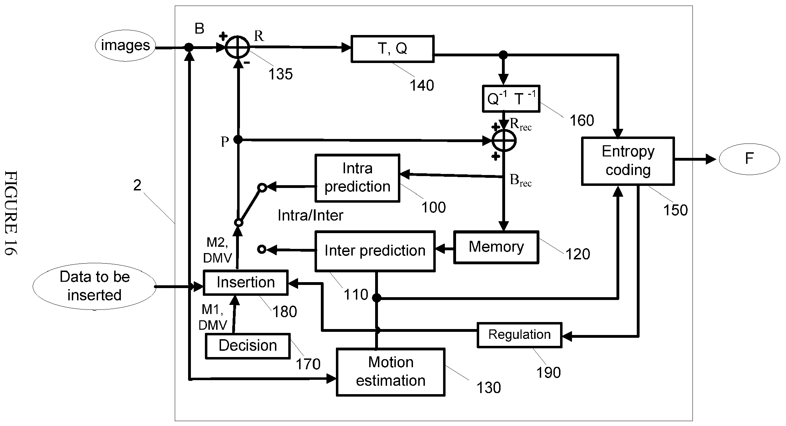

The invention also relates to a coding device 2 illustrated by **figure 16****.** The modules of the coding device according to the invention being identical to those of the coding device 1 according to the prior art and illustrated by figure 1 are identified in figure 16 using the same numerical references and are not further described. The coding device 2 according to the invention also comprises an insertion module 180 able to implement the steps E10 and E12 of the insertion method. For this purpose, the insertion module comprises a module 1800 able to modify the first prediction mode M1 of the current block B, initially selected by the decision module 170, into a second prediction mode M2 according to the data b to be inserted. It also comprises a module 1810 able to associate the motion data DMV initially associated with the block B with the sub-blocks defined by the second prediction mode M2 with a view to the coding of the block B.

According to a particular embodiment, the coding device 2 also comprises a bitrate regulation device 190 that fixes the number of data to be inserted by the insertion module 180 for each image in order to limit the increase in bitrate linked to this insertion. Such a bitrate regulation module 190 is able to limit the number of data inserted into an image according to predefined parameters. According to a particular embodiment, the bitrate regulation module 190 limits the number of data inserted into an image according to the target bitrate R of the stream (for example R=1 Mbits/s) and the maximum number Nₘₐₓ of data inserted per image (for example Nₘₐₓ= 20 bits). These two parameters are predefined according to the targeted application. When the bitrate F is attained or when the number of data inserted in the current image is equal to Nₘₐₓ, then the bitrate regulation module 190 sends a signal to the data insertion module signifying to it to stop the insertion of data in the current image.

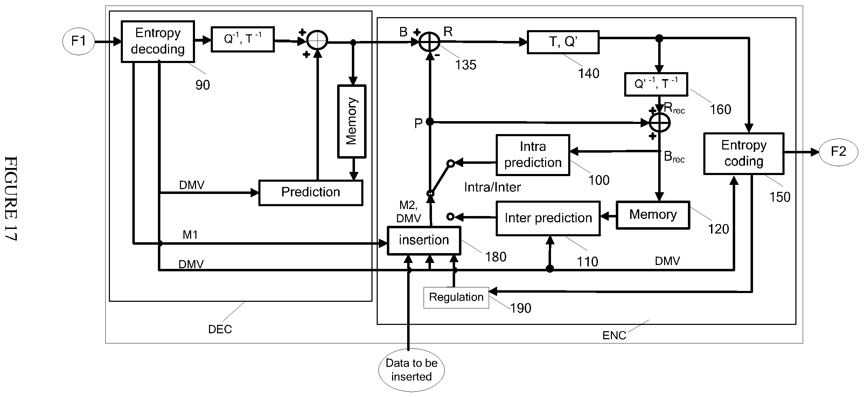

The invention also relates to a transcoding device 3 shown in **figure 17****.** The transcoding device 3 comprises a first group DEC of modules representing a decoding loop. The group DEC comprises an entropy decoding module 90, a module of inverse quantification and transformation 80, a module of temporal and spatial prediction 85 and a memory 75 in which are stored the reconstructed image data. The transcoding device 3 comprises a second group ENC of modules representing a coding loop. This coding loop comprises modules identical to the modules of the coding device 2 of figure 11. The modules of the transcoding device 3 identical to those of the coding device 2 are identified on figure 17 using the same numerical references and are not described in further detail. The transcoding device 3 receives at input a stream of coded data F1, decodes it using the modules of the first group of modules DEC and re-codes them in a second stream of coded data F2 representative of the same sequence of images as the stream of coded data F1 but having a different bitrate. The first group of modules DEC notably comprises an entropy decoding module 90. According to an essential characteristic of the invention the transcoding device 3 comprises an insertion module 180 able to implement the steps E10 and E12 of the method for insertion. For this purpose, the insertion module 180 comprises a module 1800 able to modify the first prediction mode M1 of the current block B, decoded by the entropy decoding module 90, into a second prediction mode M2 according to the data b to be inserted. It also comprises a module 1810 able to associate the motion data DMV initially associated with the block B and decoded by the entropy decoding module 90, with the sub-blocks defined by the second prediction mode M2 with a view to the coding of the block B. According to a particular embodiment, the transcoding device 2 also comprises a bitrate regulation device 190 that fixes the number of data to be inserted by the insertion module 180 for each image in order to limit the increase in bitrate linked to this insertion. Such a bitrate regulation module 190 is able to limit the number of data inserted into an image according to predefined parameters. According to a particular embodiment, the bitrate regulation module 190 limits the number of data inserted into an image according to the target bitrate R2 of the stream F2 (for example R2=1Mbits/s) and the maximum number Nₘₐₓ of data inserted per image (for example Nₘₐₓ= 20 bits). These two parameters are predefined according to the targeted application. When the bitrate F is attained or when the number of data inserted in the current image is equal to Nₘₐₓ, then the bitrate regulation module 190 sends a signal to the data insertion module signifying to it to stop the insertion of data in the current image.

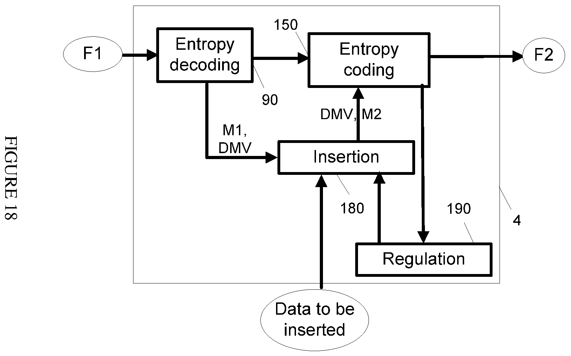

The invention also relates to a device for insertion of data 4 in a stream of coded image data F1 illustrated in **figure 18****.** The data insertion device 4 comprises modules identical to the module of the transcoding device 3 of figure 17. The modules of the data insertion device 4 identical to those of the transcoding device 3 are identified in figure 18 using the same numerical references and are not described in further detail. The data insertion device 4 comprises notably an entropy decoding module 90, a data insertion module 180 and an entropy coding module 150. The entropy decoding device 90 decoded the stream F1. The first prediction modes M1 and the motion data associated with the blocks coded in mode INTER are transmitted to the data insertion module. The other decoded data are transmitted directly from the entropy decoding module 90 to the entropy coding module 150 without being modified. The entropy coding module 150 codes the motion data, the second prediction modes M2 modified by the data insertion module 180 and the other elements decoded by the entropy decoding module 90.
According to a particular embodiment, the data insertion device 4 also comprises a bitrate regulation device 190 that fixes the number of data to be inserted by the insertion module 180 for each image in order to limit the increase in bitrate linked to this insertion.

## Claims

1. Method for insertion of a data in a block of image data, referred to as the current block, of a sequence of images, said current block being coded or being intended to be coded in the form of temporally predicted image data from prediction image data defined according to a first prediction mode, said prediction mode defining a partition of said block into one or more sub-blocks,
said insertion method being **characterized in that** it comprises the modification (E10, E100, E110, E120), according to said data to be inserted, of said first prediction mode into a second prediction mode different from the first prediction mode with a view to coding of said current block according to said second prediction mode, said second prediction mode being defined so that the prediction image data obtained with said second prediction mode are identical to the prediction image data obtained with said first prediction mode, whereby said second prediction mode defines a partition of said current block in at least two sub-blocks.

2. Device for insertion of a data in a block of image data, referred to as the current block, of a sequence of images, said current block being coded or being intended to be coded in the form of temporally predicted image data from prediction image data defined according to a first prediction mode, said prediction mode defining a partition of said block into one or more sub-blocks,
**characterized in that** said insertion device is configured to modify, according to said data to be inserted, said first prediction mode into a second prediction mode different from the first prediction mode with a view to coding of said current block according to said second prediction mode, said second prediction mode being defined so that the prediction image data obtained with said second prediction mode are identical to the prediction image data obtained with said first prediction mode, whereby said second prediction mode defines a partition of said current block in at least two sub-blocks.

3. Method according to claim 1 or device according to claim 2, wherein said first prediction mode defines a first partition of said current block in at least one sub-block to which at least one motion data is associated and wherein the second prediction mode defines a second partition of said current block in at least two sub-blocks, said second partition being a subpartition of said first partition, said method further comprising the association (E12) with each of said at least two sub-blocks of said second partition of the corresponding at least one motion data of said first partition.

4. Method according to claim 3 or device according to claim 3, wherein in said at least one motion data is a motion vector and an index identifying a reference image in said sequence.

5. Method according to claim 3 or 4 or device according to claim 3 or 4, wherein, said first prediction mode is the INTER_16x16 mode and said second prediction mode is the INTER_8x16 mode if said data to be inserted is a bit of a first value and said second prediction mode is the INTER_16x8 mode if said data to be inserted is a bit of a second value different to said first value.

6. Method according to claim 3 or 4 or device according to claim 3 or 4, wherein, said first prediction mode is the INTER_16x8 mode and said second prediction mode is the INTER_8x8 mode if said data to be inserted is a bit of a first value.

7. Method according to claim 3 or 4 or device according to claim 3 or 4, wherein, said first prediction mode is the INTER_8x16 mode and said second prediction mode is the INTER_8x8 mode if said data to be inserted is a bit of a second value different to said first value.

8. Method according to claim 1 or device according to claim 2, wherein, said first prediction mode is the mode INTER_SKIP and said second prediction mode is the mode INTER_16x16.

9. Method according to claim 3 or 4 or device according to claim 3 or 4, wherein, said first prediction mode is the INTER_8x8 mode and said second prediction mode is the INTER_4x8 mode if said data to be inserted is a bit of a first value and said second prediction mode is the INTER_8x4 mode if said data to be inserted is a bit of a second value different to said first value.

10. Method according to claim 3 or 4 or device according to claim 3 or 4, wherein, said first prediction mode is the INTER_8x4 mode and said second prediction mode is the INTER_4x4 mode if said data to be inserted is a bit of a first value.

11. Method according to claim 3 or 4 or device according to claim 3 or 4, wherein, said first prediction mode is the INTER_4x8 mode and said second prediction mode is the INTER_4x4 mode if said data to be inserted is a bit of a second value different to said first value.

12. Method for reading of data inserted in a coded data stream representative of a block of image data, referred to as the current block, of a sequence of images, said stream comprising information representative of a prediction mode defining a partition of said current block into at least one sub-block, and comprising for said at least one sub-block, called first sub-block, information representative of at least one motion data, said method for reading being **characterized in that** it comprises the following steps:
- determining (E20) said prediction mode of said current block and, for each said first sub-block, at least one motion data from said coded data stream,
- comparing (E22) said at least one motion data with a comparison motion data, and
- reading (E24) an inserted data if said at least one motion data and said comparison motion data are identical.

13. Method according to claim 12, wherein said comparison motion data is a motion data predicted from motion data associated with neighboring blocks of said current block or a motion data associated with a block collocated to said current block.

14. Method according to claim 12, wherein said prediction mode defines a partition of said current block into the first sub-block and a second sub-block, and wherein said comparison motion data is a motion data associated with said second sub-block.

## Patentansprüche

1. Verfahren zum Einfügen einer Dateneinheit in einen Block von Bilddaten, als der gegenwärtige Block bezeichnet, einer Folge von Bildern, wobei der gegenwärtige Block in Form zeitlich vorhergesagter Bilddaten von in Übereinstimmung mit einer ersten Vorhersagebetriebsart definierten Vorhersagebilddaten codiert ist oder codiert werden soll, wobei die Vorhersagebetriebsart eine Partition des Blocks in einen oder mehrere Teilblöcke definiert,
wobei das Einfügeverfahren **dadurch gekennzeichnet** ist, das es die Änderung (E10, E100, E110, E120) der ersten Vorhersagebetriebsart in eine zweite Vorhersagebetriebsart, die von der ersten Vorhersagebetriebsart verschieden ist, mit Blick auf die Codierung des gegenwärtigen Blocks in Übereinstimmung mit der zweiten Vorhersagebetriebsart in Übereinstimmung mit der einzufügenden Dateneinheit umfasst, wobei die zweite Vorhersagebetriebsart in der Weise definiert ist, dass die mit der zweiten Vorhersagebetriebsart erhaltenen Vorhersagebilddaten gleich den mit der ersten Vorhersagebetriebsart erhaltenen Vorhersagebilddaten sind, wobei die zweite Vorhersagebetriebsart eine Partition des gegenwärtigen Blocks in mindestens zwei Teilblöcke definiert.

2. Vorrichtung zum Einfügen einer Dateneinheit in einen Block von Bilddaten, als der gegenwärtige Block bezeichnet, einer Folge von Bildern, wobei der gegenwärtige Block in Form zeitlich vorhergesagter Bilddaten von in Übereinstimmung mit einer ersten Vorhersagebetriebsart definierten Vorhersagebilddaten codiert ist oder codiert werden soll, wobei die Vorhersagebetriebsart eine Partition des Blocks in einen oder mehrere Teilblöcke definiert,
**dadurch gekennzeichnet, dass** die Einfügevorrichtung dafür konfiguriert ist, die Vorhersagebetriebsart in eine zweite Vorhersagebetriebsart, die von der ersten Vorhersagebetriebsart verschieden ist, mit Blick auf die Codierung des gegenwärtigen Blocks in Übereinstimmung mit der zweiten Vorhersagebetriebsart in Übereinstimmung mit der einzufügenden Dateneinheit zu ändern, wobei die zweite Vorhersagebetriebsart in der Weise definiert ist, dass die mit der zweiten Vorhersagebetriebsart erhaltenen Vorhersagebilddaten gleich den mit der ersten Vorhersagebetriebsart erhaltenen Vorhersagebilddaten sind, wobei die zweite Vorhersagebetriebsart eine Partition des gegenwärtigen Blocks in mindestens zwei Teilblöcke definiert.

3. Verfahren nach Anspruch 1 oder Vorrichtung nach Anspruch 2, wobei die erste Vorhersagebetriebsart eine erste Partition des gegenwärtigen Blocks in mindestens einen Teilblock, dem mindestens eine Bewegungsdateneinheit zugeordnet ist, definiert und wobei die zweite Vorhersagebetriebsart eine zweite Partition des gegenwärtigen Blocks in mindestens zwei Teilblöcke definiert, wobei die zweite Partition eine Teilpartition der ersten Partition ist, wobei das Verfahren ferner die Zuordnung (E12) zu jedem der mindestens zwei Teilblöcke der zweiten Partition der entsprechenden mindestens einen Bewegungsdateneinheit der ersten Partition umfasst.

4. Verfahren nach Anspruch 3 oder Vorrichtung nach Anspruch 3, wobei in der mindestens einen Bewegungsdateneinheit ein Bewegungsvektor und ein Index, der ein Referenzbild in der Folge identifiziert, sind.

5. Verfahren nach Anspruch 3 oder 4 oder Vorrichtung nach Anspruch 3 oder 4, wobei die erste Vorhersagebetriebsart die INTER_16×16-Betriebsart ist und die zweite Betriebsart die INTER_8×16-Betriebsart ist, falls die einzufügende Dateneinheit ein Bit mit einem ersten Wert ist, und die zweite Vorhersage die INTER_16×8-Betriebsart ist, falls die einzufügende Dateneinheit ein Bit mit einem zweiten Wert, der von dem ersten Wert verschieden ist, ist.

6. Verfahren nach Anspruch 3 oder 4 oder Vorrichtung nach Anspruch 3 oder 4, wobei die erste Vorhersagebetriebsart die INTER_16×8-Betriebsart ist und die zweite Vorhersagebetriebsart die INTER_8×8-Betriebsart ist, falls die einzufügende Dateneinheit ein Bit mit einem ersten Wert ist.

7. Verfahren nach Anspruch 3 oder 4 oder Vorrichtung nach Anspruch 3 oder 4, wobei die erste Vorhersagebetriebsart die INTER_8×16-Betriebsart ist und die zweite Vorhersagebetriebsart die INTER_8×8-Betriebsart ist, falls die einzufügende Dateneinheit ein Bit mit einem zweiten Wert, der von dem ersten Wert verschieden ist, ist.

8. Verfahren nach Anspruch 1 oder Vorrichtung nach Anspruch 2, wobei die erste Vorhersagebetriebsart die INTER_SKIP-Betriebsart ist und die zweite Vorhersagebetriebsart die INTER_16×16-Betriebsart ist.

9. Verfahren nach Anspruch 3 oder 4 oder Vorrichtung nach Anspruch 3 oder 4, wobei die erste Vorhersagebetriebsart die INTER_8×8-Betriebsart ist und die zweite Vorhersagebetriebsart die INTER_4×8-Betriebsart ist, falls die einzufügende Dateneinheit ein Bit mit einem ersten Wert ist, und die zweite Vorhersagebetriebsart die INTER_8×4-Betriebsart ist, falls die einzufügende Dateneinheit ein Bit mit einem zweiten Wert, der von dem ersten Wert verschieden ist, ist.

10. Verfahren nach Anspruch 3 oder 4 oder Vorrichtung nach Anspruch 3 oder 4, wobei die erste Vorhersagebetriebsart die INTER_8×4-Betriebsart ist und die zweite Vorhersagebetriebsart die INTER_4×4-Betriebsart ist, falls die einzufügende Dateneinheit ein Bit mit einem ersten Wert ist.

11. Verfahren nach Anspruch 3 oder 4 oder Vorrichtung nach Anspruch 3 oder 4, wobei die erste Vorhersagebetriebsart die INTER_4×8-Betriebsart ist und die zweite Vorhersagebetriebsart die INTER_4×4-Betriebsart ist, falls die einzufügende Dateneinheit ein Bit mit einem zweiten Wert, der von dem ersten Wert verschieden ist, ist.

12. Verfahren zum Lesen von Daten, die in einen codierten Datenstrom, der einen Block von Bilddaten repräsentiert, als der gegenwärtige Block bezeichnet, einer Folge von Bildern eingefügt sind, wobei der Datenstrom Informationen, die eine Vorhersagebetriebsart repräsentieren, die eine Partition des gegenwärtigen Blocks in mindestens einen Teilblock definiert, umfasst und für den mindestens einen Teilblock, erster Teilblock genannt, Informationen, die mindestens eine Bewegungsdateneinheit repräsentieren, umfasst, wobei das Verfahren zum Lesen **dadurch gekennzeichnet ist, dass** es die folgenden Schritte umfasst:
- Bestimmen (E20) der Vorhersagebetriebsart des gegenwärtigen Blocks und für jeden ersten Teilblock mindestens einer Bewegungsdateneinheit aus dem codierten Datenstrom,
- Vergleichen (E22) der mindestens einen Bewegungsdateneinheit mit einer Vergleichsbewegungsdateneinheit, und
- Lesen (E24) einer eingefügten Dateneinheit, falls die mindestens eine Bewegungsdateneinheit und die Vergleichsbewegungsdateneinheit gleich sind.

13. Verfahren nach Anspruch 12, wobei die Vergleichsbewegungsdateneinheit eine Bewegungsdateneinheit, die aus einer Bewegungsdateneinheit, die Nachbarblöcken des gegenwärtigen Blocks zugeordnet ist, oder aus einer Bewegungsdateneinheit, die einem mit dem gegenwärtigen Block ortsgleichem Block zugeordnet ist, vorhergesagt wird, ist.

14. Verfahren nach Anspruch 12, wobei die Vorhersagebetriebsart eine Partition des gegenwärtigen Blocks in den ersten Teilblock und in einen zweiten Teilblock definiert, und wobei die Vergleichsbewegungsdateneinheit eine Bewegungsdateneinheit ist, die dem zweiten Teilblock zugeordnet ist.

## Revendications

1. Procédé d'insertion d'une donnée dans un bloc de données d'image, appelé bloc courant, d'une séquence d'images, ledit bloc courant étant codé ou étant destiné à être codé sous la forme de données d'image prédites temporellement à partir de données d'image de prédiction définies selon un premier mode de prédiction, ledit mode de prédiction définissant une partition dudit bloc dans un ou plusieurs sous-blocs,
ledit procédé d'insertion étant **caractérisé en ce qu'**il comprend la modification (E10, E100, E110, E120), selon ladite donnée à insérer, dudit premier mode de prédiction en un second mode de prédiction différent du premier mode de prédiction en vue de coder ledit bloc courant selon ledit second mode de prédiction, ledit second mode de prédiction étant défini de sorte que les données d'image de prédiction obtenues à l'aide dudit second mode de prédiction soient identiques aux données d'image de prédiction obtenues à l'aide dudit premier mode de prédiction, où ledit second mode de prédiction définit une partition dudit bloc courant dans au moins deux sous-blocs.

2. Dispositif d'insertion d'une donnée dans un bloc de données d'image, appelé bloc courant, d'une séquence d'images, ledit bloc courant étant codé ou étant destiné à être codé sous la forme de données d'image prédites temporellement à partir de données d'image de prédiction définies selon un premier mode de prédiction, ledit mode de prédiction définissant une partition dudit bloc dans un ou plusieurs sous-blocs,
**caractérisé en ce que** ledit dispositif d'insertion est configuré pour modifier, selon ladite donnée à insérer, ledit premier mode de prédiction en un second mode de prédiction différent du premier mode de prédiction en vue de coder ledit bloc courant selon ledit second mode de prédiction, ledit second mode de prédiction étant défini de sorte que les données d'image de prédiction obtenues à l'aide dudit second mode de prédiction soient identiques aux données d'image de prédiction obtenues à l'aide dudit premier mode de prédiction, où ledit second mode de prédiction définit une partition dudit bloc courant dans au moins deux sous-blocs.

3. Procédé selon la revendication 1 ou dispositif selon la revendication 2, dans lequel ledit premier mode de prédiction définit une première partition dudit bloc courant dans au moins un sous-bloc auquel au moins une donnée de mouvement est associée et dans lequel le second mode de prédiction définit une seconde partition dudit bloc courant dans au moins deux sous-blocs, ladite seconde partition étant une sous-partition de ladite première partition, ledit procédé comprenant en outre l'association (E12) avec chacun desdits au moins deux sous-blocs de ladite seconde partition de la au moins une donnée de mouvement correspondante de ladite première partition.

4. Procédé selon la revendication 3 ou dispositif selon la revendication 3, dans lequel dans ladite au moins une donnée de mouvement est un vecteur de mouvement et un index identifiant une image de référence dans ladite séquence.

5. Procédé selon la revendication 3 ou 4 ou dispositif selon la revendication 3 ou 4, dans lequel ledit premier mode de prédiction est le mode INTER_16x16 et ledit second mode de prédiction est le mode INTER_8x16 si ladite donnée à insérer est un bit d'une première valeur et ledit second mode de prédiction est le mode INTER_16x8 si ladite donnée à insérer est un bit d'une seconde valeur différente de la première valeur.

6. Procédé selon la revendication 3 ou 4 ou dispositif selon la revendication 3 ou 4, dans lequel ledit premier mode de prédiction est le mode INTER_16x8 et ledit second mode de prédiction est le mode INTER_8x8 si ladite donnée à insérer est un bit d'une première valeur.

7. Procédé selon la revendication 3 ou 4 ou dispositif selon la revendication 3 ou 4, dans lequel ledit premier mode de prédiction est le mode INTER_8x16 et ledit second mode de prédiction est le mode INTER_8x8 si ladite donnée à insérer est un bit d'une seconde valeur différente de ladite première valeur.

8. Procédé selon la revendication 1 ou dispositif selon la revendication 2, dans lequel ledit premier mode de prédiction est le mode INTER_SKIP et ledit second mode de prédiction est le mode INTER_16x16.

9. Procédé selon la revendication 3 ou 4 ou dispositif selon la revendication 3 ou 4, dans lequel ledit premier mode de prédiction est le mode INTER_8x8 et ledit second mode de prédiction est le mode INTER_4x8 si ladite donnée à insérer est un bit d'une première valeur et ledit second mode de prédiction est le mode INTER_8x4 si ladite donnée à insérer est un bit d'une seconde valeur différente de ladite première valeur.

10. Procédé selon la revendication 3 ou 4 ou dispositif selon la revendication 3 ou 4, dans lequel ledit premier mode de prédiction est le mode INTER_8x4 et ledit second mode de prédiction est le mode INTER_4x4 si ladite donnée à insérer est un bit d'une première valeur.

11. Procédé selon la revendication 3 ou 4 ou dispositif selon la revendication 3 ou 4, dans lequel ledit premier mode de prédiction est le mode INTER_4x8 et ledit second mode de prédiction est le mode INTER_4x4 si ladite donnée à insérer est un bit d'une seconde valeur différente de ladite première valeur.

12. Procédé de lecture de données insérées dans un flux de données codé représentatif d'un bloc de données d'image, appelé bloc courant, d'une séquence d'images, ledit flux comprenant des informations représentatives d'un mode de prédiction définissant une partition dudit bloc courant dans au moins un sous-bloc et comprenant pour ledit au moins un sous-bloc, appelé premier sous-bloc, des informations représentatives d'au moins une donnée de mouvement, ledit procédé de lecture étant **caractérisé en ce qu'**il comprend les étapes suivantes :
- détermination (E20) dudit mode de prédiction dudit bloc courant et, pour chaque dit premier sous-bloc, d'au moins une donnée de mouvement à partir dudit flux de données codé,
- comparaison (E22) de ladite au moins une donnée de mouvement avec une donnée de mouvement de comparaison, et
- lecture (E24) d'une donnée insérée si ladite au moins une donnée de mouvement et ladite donnée de mouvement de comparaison sont identiques.

13. Procédé selon la revendication 12, dans lequel ladite donnée de mouvement de comparaison est une donnée de mouvement prédite à partir de données de mouvement associées aux blocs voisins dudit bloc courant ou une donnée de mouvement associée à un bloc adjacent audit bloc courant.

14. Procédé selon la revendication 12, dans lequel ledit mode de prédiction définit une partition dudit bloc courant dans le premier sous-bloc et un second sous-bloc, et dans lequel ladite donnée de mouvement de comparaison est une donnée associée audit second sous-bloc.
